(19) Europäisches Patentamt
European Patent Office
Office européen des brevets

(11) **EP 1 134 555 A1**

(12) **EUROPEAN PATENT APPLICATION**

(43) Date of publication:
**19.09.2001 Bulletin 2001/38**

(51) Int Cl.[7]: **G01C 22/00**, G01C 21/16

(21) Application number: **00200852.2**

(22) Date of filing: **10.03.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **In2Sports B.V.**
**5612 AR Eindhoven (NL)**

(72) Inventor: **Boddeke, Frank Robbert**
**Emerald Hills, CA 94062 (US)**

(74) Representative: **Aalbers, Arnt Reinier**
**De Vries & Metman**
**Overschiestraat 180**
**1062 XK Amsterdam (NL)**

(54) **Method for determining velocity and travelled distance of a pedestrian**

(57) The invention pertains to a method and a device for determining the distance travelled by and/or the velocity of a person travelling on foot, which at least comprises 1) obtaining samples of the acceleration of at least one part of the body of that person and in at least one direction, 2) calculating the distance travelled and/or the velocity from the obtained samples, 3) periodically obtaining data concerning the position of the person from a global positioning system, and 4) calibrating the calculated distance and/or the velocity with this data.

Figure

**Description**

The invention pertains to a method for determining the distance travelled by and/or the velocity of a person travelling on foot.

Such a method is known from, e.g., US 5,583,776, which describes a navigation system. It is described that dead reckoning is often used to measure or deduce displacements from a known starting point in accordance with the motion of the user and that two type of dead reckoning are known, viz. inertial navigation and navigation by employing a combination of a compass and a speedometer.

It is explained that inertial navigation systems use data from two or more (preferably) orthogonal accelerometers. Single integration of the obtained data calculates velocity from acceleration as the user moves, whereas double integration calculates position. The results of the integration are added to the starting position so as to obtain current location. The position errors increase with the square of time due to the double integration and a typical inertial navigation system is said to have a drift rate of 0.8 miles per hour.

US 5,583,776 further explains that a considerable amount of work has been done related to the integration of a Global Positioning System or GPS and inertial navigation systems, but that such work has not been done specifically for foot traveller, biker, or pedestrian use in this area.

Since GPS data can be either unreliable or unavailable due to antenna shading, jamming, or interference, the invention underlying US 5,583,776 provides for the incorporation of dead reckoning functions with GPS position information, thus providing the individual foot traveller with an autonomous navigation capability. It is stated in US 5,583,776 that, compared with a stand-alone GPS receiver, the integrated GPS/dead reckoning system provides advantages during GPS outages. In these outages, dead reckoning continuously tracks the user's position without external aids or signals.

It is an object of the present invention to provide a method as described in the first paragraph, which is capable of accurately determining the distance travelled by and/or the velocity of a person travelling on foot, which does not require complicated calibration, and which is energy efficient.

To this end, the method according to the present invention at least comprises 1) obtaining samples of the acceleration of at least one part of the body of a person, especially a runner, and in at least one direction, 2) calculating the distance travelled and/or the velocity from the obtained samples, 3) periodically obtaining data concerning the position of the person from a global positioning system, and 4) calibrating the calculated distance and/or the velocity with this data.

It was surprisingly found that, for a person travelling at a relatively low velocity (e.g. ranging from 0 to 25 km/h), the length of the time intervals during which the accuracy of accelerometers is still within acceptable boundaries roughly coincides with the minimum distance between separate GPS positions at which the accuracy of GPS becomes acceptable. For runners on a short track, it is preferred that a GPS position is obtained at interval smaller than 20 meters, preferably smaller than 15 meters and more preferably smaller than 10 meters. For persons walking a long distance, it is preferred that a GPS position is obtained at interval smaller than 75 meters, preferably smaller than 50 meters and more preferably smaller than 25 meters.

It is preferred that the calibration of the calculated distance and/or velocity is temporarily interrupted when the sampled acceleration is zero or substantially zero, so as to avoid any inaccuracies resulting from GPS.

The distance travelled since the last calibration and/or the velocity e.g. can be calculated by integration of the acceleration or by simply multiplying the average stride length by the number of strides that occurred since the last calibration. In that case, it is preferred that the average stride length of the person is determined by dividing the distance between two or more recent calibrations by the number of strides that occurred over that distance.

The invention further pertains to a portable device for determining the distance travelled by and/or the velocity of a person travelling on foot, which comprises one or more accelerometers, a positioning unit for periodically obtaining data concerning the position of the person by means of a global positioning system, a processing unit for at least 1) calculating the distance travelled and/or the velocity from information obtained from the one or more accelerometers and 2) calibrating the thus calculated distance and/or velocity with the data obtained from the global positioning system, and a display for showing the distance travelled by and/or the velocity of a person.

In such a device, it is preferred that the one or more accelerometers, the positioning unit, the processing unit an a sending means are combined into a first component and the display and a receiving means are integrated in a second component and wherein data generated in the first component can be communicated to the second component.

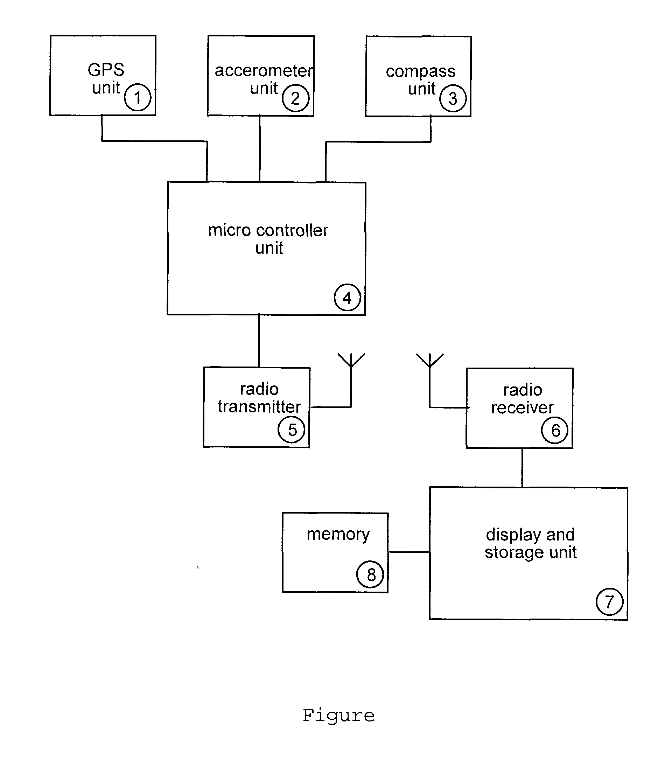

The invention will be further explained by reference to the figure in which an embodiment of the device according to the invention is schematically shown. This explanation is provided, amongst other reasons, to enable the artisan to make and use the invention and set forth the best mode contemplated by the inventors of carrying out their invention.

GPS measurements provide absolute position data in three dimensions, i.e., x, y and height. Civilian position measurements with GPS provide position data (Pgps) that are composed of the actual position (Pactual) and an artificial error component (Egps). This error is due to so-called selective availability (SA), which means that noise has been deliberately added by the United States department of defense. The said noise is time-correlated and results in an average error of about 50 meters and a long time average (t > 1000 sec) of (near) zero. Due to the time correlation in the GPS error, speed derived from two or more GPS positions (Vgps = d Pgps / dt or, in practice, Vgps = ( Pgps(t+$\Delta$t)- Pgps(t) ) / $\Delta$t, in which $\Delta$t is the sample time at which the GPS gives position measurements; $\Delta$t typically equals 1 second) effectively comprises at least two error components.

Further, if a runner using GPS does not move , for instance during periods of rest or exercises on the spot, the actual speed (Vactual), of course, equals zero. In contrast, the speed obtained via GPS measurements (Vgps) is still:

$$Vgps = ( Egps(t+\Delta t) - Egps(t) ) / \Delta t,$$

which error varies around zero with speeds up to 0.3 m/s (1.1 km/h) and with an average speed of typically 0.15 m/s (0.54 km/h), depending on sampling rate, position and time.

Thus, the detrimental effects of SA are especially noticeable for objects that move relatively slowly, such as runners. It would be fair to say that for slow moving object the measured speed is dominated by the "noise speed" and not by the actual speed. Further, height measurements and, accordingly climbing rate, are very much affected by the SA.

Systems that rely on accelerometer based measurements require relatively low power. However, (relative) position and distance measurements are inaccurate due to necessity of double integration of accelerometer data. Since the measured acceleration (Aaccelerometer) is the sum of the actual acceleration (Aactual) plus an error component (Eaccelerometer). The average the noise component is not zero due to possible misalignment of the sensors and calibration errors (always present).

A speed measured with an accelerometer equals the acceleration data integrated to time or, in practice, the said speed equals the previous speed plus the current acceleration times the time between samples (Vaccelerometer = Integrate [Aaccelerometer, t] or, in practice,

$$Vaccelerometer [t] = Vaccelerometer [t-\Delta t] + \Delta t \, ^{*}$$

Aaccelerometer [t], in which $\Delta$t is the sample time at which the accelerometer gives acceleration measurements).

With the errors in the measurements results in a substantial error component:

$$Vaccelerometer[t] = Vactual[t] + Sum[Eaccelerometer] \, ^{*} \, \Delta t.$$

As can be seen from this equation, the error component in the speed increases with time, since the average of the error is not zero. To determine the position with an accelerometer, the accelerometer data needs to be integrated to time twice (Aaccelerometer = Integrate [ Integrate [Aaccelerometer,t] ,t]; or including sampling: Paccelerometer [t] = $\Delta$t $^{*}$ $\Delta$t $^{*}$ Aaccelerometer[t] + Paccelerometer[t-$\Delta$t], i.e. the new position is the last position plus the square of the sampling time times the current accelerometer measurement). Taking into account the error gives:

$$Paccelerometer[ \, t \, ] = Pactual[t] + Sum[Eaccelerometer] \, ^{*} \, \Delta t \, ^{*} \, \Delta t.$$

As can be seen, the error in the position determination grows very rapidly in time. If speed and (relative) position are measured in three dimensions, the said errors also occur in three dimensions.

The Figure schematically shows a device according to the present invention. This device comprises a GPS unit 1 for picking up GPS satellite signals and calculating the position (latitude, longitude, height) of the person wearing the device. It further comprises an accelerometer unit 2, containing one or more solid-state accelerometer units, which measure acceleration in one or more, preferably orthogonal, directions. If a single accelerometer is used as a step counter, it is preferred that the accelerometer is oriented vertically. Further, one or more gyroscopes can be provided to measure the inclination and rotation of the accelerometers and to remove the effects of gravity. A compass unit 3 comprising an electronic compass unit for measuring bearing is also optional.

The mentioned units are connected to a micro controller unit 4, which comprises a processor unit for collecting the GPS data, accelerometer acceleration and, optionally, compass bearing, and for data conversion, autocalibration, data processing (resulting in values of position, height, distance, velocity, steps-count, climbing rate), power management and packing of output data to be send via a low power radio transmitter 5.

The micro controller unit 4 can collect data from the sensors at different sample rates. It converts sensor data to an appropriate format so as to enable further processing. In accordance with the present invention, the micro controller employs GPS data to calibrate the accelerometer data. The micro controller unit subsequently calculates velocity, climbing rate and step-count from the accelerometer data. Power management controls feedback from the velocity measurements to the sample frequency of the GPS. At low speeds the sampling rate of the GPS is reduced to save power. Since it is preferred that GPS data is ignored while standing still, the sampling rate of the GPS in that case can even be reduced to zero. All output measurements, such as position, height, velocity, climbingrate, step-count, are packed in a format suitable for radio transmission via the radio transmitter 5.

A radio receiver 6 is provided to pick up data packages transmitted by the transmitter 5 and forward the data packages to a display and storage unit 7. This unit 7 decodes and validates the data packages, selects the data that are to be displayed, displays such data and stores the data in the memory unit 8. The memory unit 8 logs acquired data for later display or for transfer to a computer for analysis and long time storage.

Thus units 1 to 5 are combined in a data collector, which can be carried by the user, preferably such that the general direction of movement is along the main axis of the unit. The units 6 to 8 are combined in the user interface and display unit, which is, for example, watch-like or which is integrated in a pair of glasses. At any rate, it is preferred that the user can read the information in the display while exercising.

The accelerometer can determine the relative change in position with regards to the last GPS position (due to obstructed satellite view or low GPS sampling rate). The accelerometer is used to interpolate the position in between the GPS position measurements. The increase (in time) of the position and speed error components of the accelerometer is cancelled by the next GPS position measurement.

From the above explanations and embodiment, it will be evident that by using accelerometers to measure the distance travelled by and the speed of a runner and by periodically calibrating the said distance travelled and speed by means of GPS, low speeds (in the order of e.g. from 5 to 25 km/h) relative height and climbing rate can be accurately determined. Further, the GPS sampling rate can be decreased thus saving power and avoiding the need of bringing along replacement batteries on long tracks (e.g., in excess of 30 kilometers).

Thus, considerable advantages are provided over systems that employ GPS alone or GPS supplemented with dead reckoning during GPS outages.

The invention is not in any way restricted to the above described embodiments and can be varied in many ways within the scope of the claims.

**Claims**

1. Method for determining the distance travelled by and/or the velocity of a person travelling on foot which method at least comprises

   - obtaining samples of the acceleration of at least one part of the body of that person and in at least one direction,
   - calculating the distance travelled and/or the velocity from the obtained samples,
   - periodically obtaining data concerning the position of the person from a global positioning system, and
   - calibrating the calculated distance and/or the velocity with this data.

2. Method according to claim 1, wherein the calibration of the calculated distance and/or velocity is temporarily interrupted when the sampled acceleration is zero or substantially zero.

3. Method according to claim 1 or 2, wherein the distance travelled since the last calibration and/or the velocity is calculated by multiplying the average stride length by the number of strides that occurred since the last calibration.

4. Method according to claim 3, wherein the average stride length of the person is determined by dividing the distance between two or more recent calibrations by the number of strides that occurred over that distance.

5. Portable device for determining the distance travelled by and/or the velocity of a person travelling on foot, which comprises one or more accelerometers, a positioning unit for periodically obtaining data concerning the position of the person by means of a global positioning system, a processing unit for at least 1) calculating the distance travelled and/or the velocity from information obtained from the one or more accelerometers and 2) calibrating the thus calculated distance and/or velocity with the data obtained from the global positioning system, and a display for showing the distance travelled by and/or the velocity of a person.

6. Device according to claim 5, wherein the one or more accelerometers, the positioning unit, the processing unit an a sending means are combined into a first component and the display and a receiving means are integrated in a second component and wherein data generated in the first component can be communicated to the second component.

**7.** Device according to claim 6, wherein the sending means comprises a radio transmitter and the receiving means comprises a radio receiver.

**8.** Device according to any one of the claims 5-7, wherein the device comprises at least two accelerometers, one of which is oriented substantially vertically and one of which is oriented in a direction where the person is likely to be headed.

**9.** Device according to any one of the claims 5-8, wherein the device comprises a transponder.

GPS unit ①

accerometer unit ②

compass unit ③

micro controller unit ④

radio transmitter ⑤

radio receiver ⑥

memory ⑧

display and storage unit ⑦

Figure

**European Patent Office**

# EUROPEAN SEARCH REPORT

Application Number

EP 00 20 0852

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 009 375 A (NAKAMURA CHIAKI ET AL) 28 December 1999 (1999-12-28) | 1-5 | G01C22/00 G01C21/16 |
| Y | * column 5, line 6 - column 6, line 43; figures 7-10 * | 6-9 | |
| D,Y | US 5 583 776 A (LEVI ROBERT W ET AL) 10 December 1996 (1996-12-10) * column 1, line 18 - column 2, line 14 * * column 7, line 6 - column 8, line 24 * | 6-9 | |
| X | GB 2 336 208 A (JATCO CORP) 13 October 1999 (1999-10-13) * page 20, line 20 - page 23, line 3; figure 1 * * page 36, line 6 - page 38, line 6; figure 6 * | 1,5 | |

TECHNICAL FIELDS SEARCHED (Int.Cl.7)

G01C
A63B
G01S

The present search report has been drawn up for all claims

| Place of search | Date of completion of the search | Examiner |
|---|---|---|
| THE HAGUE | 16 August 2000 | Boerrigter, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 134 555 A1

**ANNEX TO THE EUROPEAN SEARCH REPORT
ON EUROPEAN PATENT APPLICATION NO.**

EP 00 20 0852

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2000

| Patent document cited in search report | | Publication date | Patent family member(s) | | Publication date |
|---|---|---|---|---|---|
| US 6009375 | A | 28-12-1999 | NONE | | |
| US 5583776 | A | 10-12-1996 | NONE | | |
| GB 2336208 | A | 13-10-1999 | JP | 11194033 A | 21-07-1999 |
| | | | DE | 19860603 A | 15-07-1999 |

EPO FORM P0459

For more details about this annex : see Official Journal of the European Patent Office, No. 12/82

8